# EUROPEAN PATENT APPLICATION

(11) **EP 0 918 182 A1**
(43) Date of publication of application: **26.05.1999**
(21) Application number: 98830396.2
(22) Date of filing: 01.07.1998
(51) Int. Cl.: F16L 11/08

(54) **Flexible pipe for conveying refrigerant and air-conditioning systems**

(30) Priority: 21.11.1997 IT PR970070
(71) Applicant: Transfer Oil S.p.A., 43052 Colorno (Parma) (IT)
(72) Inventor: Ferrari, Ferdinando, 43052 Colorno (Parma) (IT)
(74) Representative: Gotra, Stefano

(57) **Abstract**

The invention falls within the sector relating to flexible pipes made of plastic and in particular has its main use in refrigerating or air-conditioning systems in which refrigerant gases such as Freon are used. The pipe comprises an internal layer (2) of flexible plastic material impermeable to liquids and in particular to water and an external layer (3) impermeable to gas. Said layers are covered by a braiding consisting of synthetic fibres (4) and by an external protective sheathing (5).

Preferably, although not exclusively, the internal layer is made of polyester or a polyester compound, while the external layer is made of polyamide or a polyamide compound.

## Description

The present invention relates to a flexible pipe for conveying refrigerant gas for refrigerating and air-conditioning systems.

In refrigerating systems, the gas used is currently conveyed by means of metal pipes since flexible pipes made of plastic have exhibited various drawbacks. The use of pipes made of metal, for example copper, involves high assembly and maintenance costs.

The only gastight plastic material currently known is polyamide or polyamide-based compounds.

Pipes for Freon gas, which are made of compounds or mixtures of polyamide and halogenated butyl rubber and chlorosulphonated polyethylene, as described in US patent No. 4,987,017, are in fact already known.

These compositions have proved to be insufficient for tightness to refrigerant gases such as Freon, while they have a good resistance to oil and to low temperatures.

The polyamides and polyamide compounds according to US patent No. 4,987,017 have the drawback that they contain and absorb water from the external environment so that, when used in refrigerating or air-conditioning plants in which the gas is subject to temperature variations or the supply ducts are of considerable length (more than one metre), a serious drawback arises such that their use has been limited to very short sections for connecting parts which are subject to vibrations as, for example, on motor vehicles.

US patent No. 4,862,923 illustrates a pipe for applications in motor car air-conditioning systems in which the refrigerant gas is in contact with rubber which is resistant to water, but not to gas.

An intermediate layer of nylon or polyamide resin has a thickness which is too small (0.1 - 1 mm) to ensure adeguate tightness with respect to the refrigerant gas.

The pipe described in said patent may be suitable for conveying refrigerant gases over short sections.

The patents WO 94/19638, GB 1476477, GB 2023626, US 5,507,320 describe pipes in which the internal layer in contact with the refrigerant gas consists of nylon or rubber, materials which are not suitable since the former contains moisture which results in the drawback described below and the latter is permeable to gas and is not compatible with the oils used inside the circuit.

This drawback consists in the fact that heating of the pipe results in evaporation of the water contained in or absorbed by the polyamide, said water partly evaporating into the external environment without creating problems and partly evaporating towards the inside of the pipe and mixing with the refrigerant gas. When said gas cools, it causes freezing of the water which previously mixed with it, with a consequent reduction or blockage of the gas supply pipe, causing breakage of the compressor owing to lack of lubrication.

The object of the present invention is that of providing a flexible pipe made of plastic which has the least possible permeability to gas and at the same time is impermeable to water entering inside the pipe itself.

These and other objects are achieved by the flexible pipe according to the present invention for conveying refrigerant gas, which is characterized in that it comprises an internal layer of flexible plastic material impermeable to liquids and an external layer of flexible plastic material impermeable to gases. A bridging material may be inserted between the two layers. The layers are covered by a braiding consisting of synthetic fibres and by an external protective sheathing.

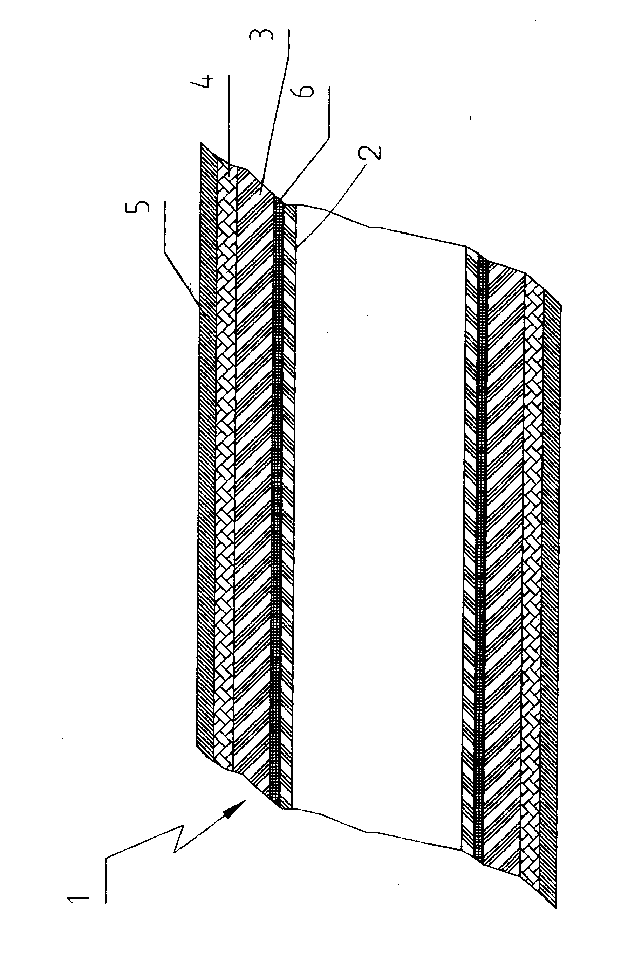

These and other characteristic features will emerge more clearly from the following description of a preferred embodiment illustrated, purely by way of a non-limiting example, in the accompanying illustrative plate, in which the sole figure shows a longitudinal section through a pipe portion.

With reference to the Figures, 1 denotes a flexible pipe portion composed of an internal layer 2 surrounded by an external layer 3. The flexible pipe comprises, moreover, above the external layer 3 a braiding consisting of synthetic fibres 4, for example polyester and finally an external protective sheathing 5.

The internal layer consists of any flexible plastic material which is impermeable to liquids and in particular to water and compatible with the fluid conveyed. The internal layer may, for example, be made of polyester or a polyester compound which is resistant to oil and resistant to low temperatures, in addition obviously to being watertight or water-repellent. The external layer 3 consists of any flexible plastic material which is gastight, such as, for example, polyamide or a polyamide-based compound.

The external polyamide layer has a thickness greater than 1 mm.

According to the known technologies, the pipe may be made by means of simultaneous extrusion of the two layers so that, if they consist of materials which are compatible with each other, automatic adhesion of the two layers will be obtained.

Otherwise a suitable bridging material 6, such as, for example, polyurethane, will be inserted between the two materials, having the function of bonding together the two layers.

The thicknesses of the two layers may vary, as required, provided that the flexibility of the pipe and the degree of gastightness is maintained.

## Claims

1. Flexible pipe for conveying refrigerant gas for refrigerating and air-conditioning systems, characterized in that it comprises an internal layer (2) of flexible plastic material impermeable to liquids such as water and an external layer (3) of flexible plastic material impermeable to gas, said layers being covered by a braiding consisting of synthetic fibres (4) and by an external protective sheathing (5).

2. Flexible pipe according to Claim 1, characterized in that the internal layer (2) is made of polyester or a polyester compound.

3. Flexible pipe according to Claim 1, characterized in that the external layer (3) is made of polyamide or a polyamide compound.

4. Flexible pipe according to Claim 1, characterized in that a layer of bridging material (6) is provided between internal layer and external layer, said bridging layer bonding the two layers together.

5. Flexible pipe according to Claim 4, characterized in that the layer of bridging material (6) is polyurethane.
